Europäisches Patentamt

(19) European Patent Office

Office européen des brevets

(11) Numéro de publication: **0 160 598**
**B1**

(12) **FASCICULE DE BREVET EUROPEEN**

(45) Date de publication du fascicule du brevet: **28.11.90**

(51) Int. Cl.⁵: **B 62 B 3/10,** B 62 B 3/02

(21) Numéro de dépôt: **85400654.1**

(22) Date de dépôt: **02.04.85**

(54) **Chariot pour le transport de plateaux porte-conteneurs, notamment pour produits alimentaires.**

(30) Priorité: **27.04.84 FR 8406710**

(43) Date de publication de la demande:
**06.11.85 Bulletin 85/45**

(45) Mention de la délivrance du brevet:
**28.11.90 Bulletin 90/48**

(84) Etats contractants désignés:
**AT BE CH DE GB IT LI LU NL SE**

(56) Documents cités:
**WO-A-81/01820**
**GB-A-1 590 951**
**US-A-3 873 115**

(73) Titulaire: **ELOPAK FRANCE**
**3-5 rue de Metz**
**F-75010 Paris (FR)**

(72) Inventeur: **Suominen, Jari**
**Laukkakuja 1**
**SF-04400 Jarvenpaa (FI)**

(74) Mandataire: **Madeuf, Claude Alexandre Jean**
**et al**
**CABINET MADEUF 3, avenue Bugeaud**
**F-75116 Paris (FR)**

**Description**

La présente invention concerne un nouveau chariot pour le transport de plateaux porte-conteneurs.

Il est bien connu que de nombreux produits, notamment alimentaires, sont maintenant distribués dans des conteneurs jetables qui présentent, soit la forme d'un parallélépipède rectangle à base rectangulaire ou à base carrée, le dessus de ces conteneurs étant soit plat, soit en forme de toit pointu suivant leur mode d'ouverture particulier.

Pour faciliter la manutention des conteneurs, il existe des plateaux appropriés à l'un ou l'autre type de conteneurs et conçus de manière que plusieurs rangées de plateaux et de conteneurs puissent être empilées les unes sur les autres, soit dans un lieu de stockage par exemple une chambre froide, soit dans un lieu de vente par exemple une vitrine réfrigérée.

On connaît par le GB—A—1 590 951 un chariot comportant un châssis fixe trapézoïdal pour permettre l'emboîtement. Le support et le maintien éventuel de charges sont assurés par un cadre pouvant pivoter et un cadre latéral, rapporté et devant donc être manoeuvré pour être détaché puis fixé pour l'utilisation du chariot. Un démontage est alors nécessaire lorsqu'on veut assurer l'emboîtement du chariot dans un autre.

Le WO 81/01820 pris comme état antérieur de la technique dans l'introduction de la revendication principale décrit un chariot dont les longerons latéraux peuvent pivoter par rapport à un panneau arrière auquel ils sont articulés. Le fond est monté sur une plaque qui présente à sa partie inférieure deux roues. A l'avant du fond une plaque de base est montée pivotante. Pour constituer le chariot comme organe de support, on abaisse la plaque et on la fixe aux longerons latéraux en agissant sur ceux-ci pour rapprocher les plaques afin de recevoir la plaque et la verrouiller. Pour emboîter le chariot dans un autre, il est nécessaire de soulever la plaque puis d'écarter les longerons latéraux.

L'invention concerne un chariot de conception très simple et de réalisation bon marché qui rend possible le transport de piles de plateaux et de conteneurs sans fatigue pour l'opérateur et sans risque de chute de conteneurs pendant le transport.

L'invention permet en outre d'effectuer la réalisation de chariots pouvant être emboîtés les uns dans les autres lorsqu'ils ne sont pas utilisés.

Conformément à l'invention, le chariot pour transport de plateaux porte-conteneurs, notamment pour produits alimentaires, comportant un châssis comprenant deux boîtiers supportés chacun par une roue et sur chacun desquels est articulé selon un axe vertical un longeron horizontal muni chacun à son extrémité opposée au boîtier de moyens sur lesquels sont fixés d'une part une roue et d'autre part un montant vertical, est caractérisé en ce que les boîtiers sont reliés ensemble rigidement par un châssis et en ce que les montants supportent chacun un cadre vertical tels qu'en utilisation du chariot ceux-ci soient tournés l'un vers l'autre et maintenus par un verrou amovible et en ce que lesdits longerons constituent des supports pour une première rangée de plateaux remplis de conteneurs sur lesquels sont placées d'autres rangées de plateaux et conteneurs.

Diverses autres particularités de l'invention ressortent d'ailleurs de la description détaillée qui suit.

Des formes de réalisation de l'objet de l'invention sont représentées, à titre d'exemples non limitatifs, au dessin annexé.

La fig. 1 est une perspective d'un chariot, conforme à l'invention, pour le transport de plateaux porte-conteneurs en position de non utilisation.

La fig. 2 est une perspective, analogue à la fig. 1, du même chariot en position d'utilisation.

La fig. 3 est une perspective, à plus grande échelle, illustrant des détails de réalisation.

La fig. 4 est une coupe vue sensiblement suivant la ligne IV—IV de la fig. 3.

La fig. 5 est une élévation latérale partielle illustrant une position caractéristique d'un des organes du chariot.

La fig. 6 est une perspective, analogue à la fig. 2, montrant le chariot chargé de plateaux porte-conteneurs.

Les fig. 7 et 8 soft des élévations de face partielles montrant deux réalisations de plateaux porte-conteneurs destinés à être transportés par le chariot des figures précédentes.

La fig. 9 est une perspective, analogue à la fig. 2, d'une variante.

La fig. 10 est une perspective d'une variante, le chariot étant en position d'utilisation.

La fig. 11 est une perspective du chariot de la fig. 10 en position de non-utilisation.

La fig. 12 est une perspective, à plus grande échelle, illustrant un détail de réalisation.

La fig. 13 est une perspective très agrandie d'un autre détail de réalisation.

La fig. 14 est une perspective vue d'arrière illustrant une position caractéristique d'un des organes constitutifs du chariot.

La fig. 15 est une vue de dessus, partie en coupe, d'un verrou.

La fig. 16 est une perspective du verrou de la fig. 15.

La fig. 17 est une perspective partielle d'un détail de réalisation.

La fig. 18 est une perspective partielle de la partie antérieure du chariot.

Le chariot illustré par le dessin comporte deux boîtiers 1, 2 reliés entre eux par des traverses 3 pour constituer un châssis.

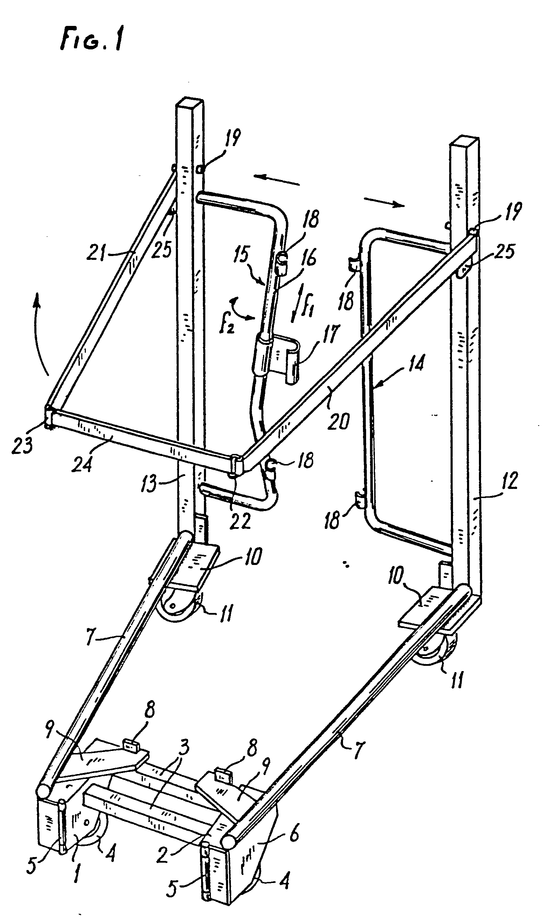

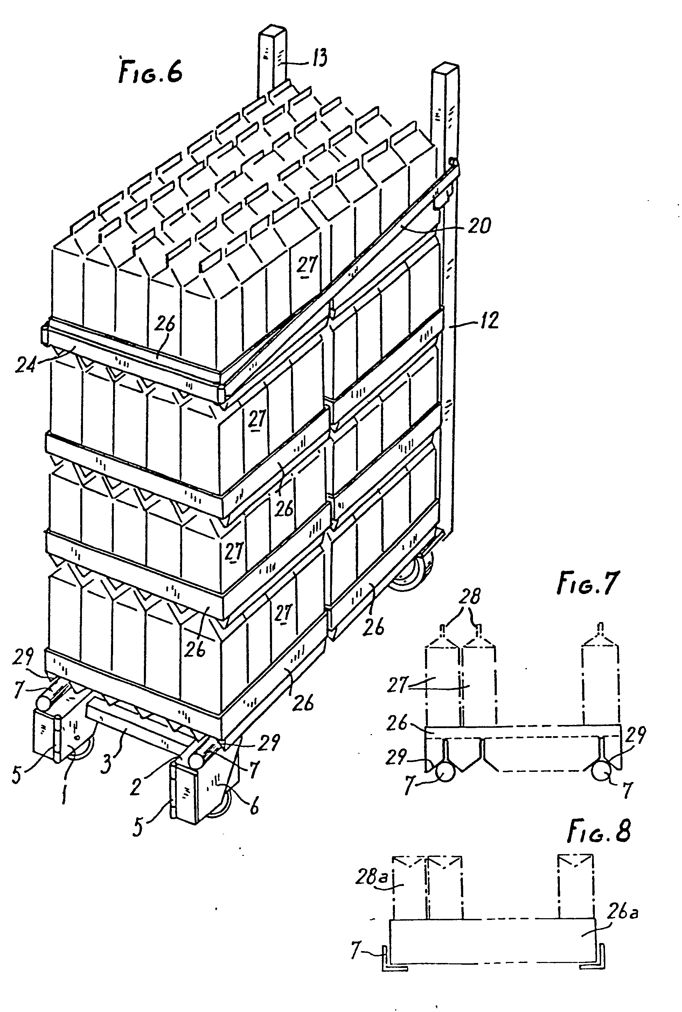

Les boîtiers 1, 2 sont munis sur une face de roues 4 et ils supportent des charnières 5 auxquelles sont articulés des goussets 6 de support de deux longerons 7. Les longerons 7 peuvent être réalisés par des tubes, comme montré par exemple aux fig. 1 et 7, ou par des cornières comme montré par la fig. 8, d'autres profilés pouvant d'ailleurs convenir.

L'une des traverses 3 supporte des butées 8 et les longerons 7 sont munis sur leur côté intérieur d'ailes 9 limitant la mesure dont peuvent pivoter lesdits longerons 7 par rapport aux boîtiers 1, 2 auxquels ils sont reliés par les charnières 5.

L'extrémité libre des longerons 7 est fixée, par exemple soudée, sur des platines 10 en dessous desquelles sont montées des roues orientables 11. Les platines 10 servent également de support à des montants 12, 13. Les montants 12, 13 supportent chacun un cadre 14, respectivement 15, les deux cadres étant tournés l'un vers l'autre. La cadre 15 est muni d'un montant courbe 16 qui porte un verrou coulissant pivotant et élastique 17.

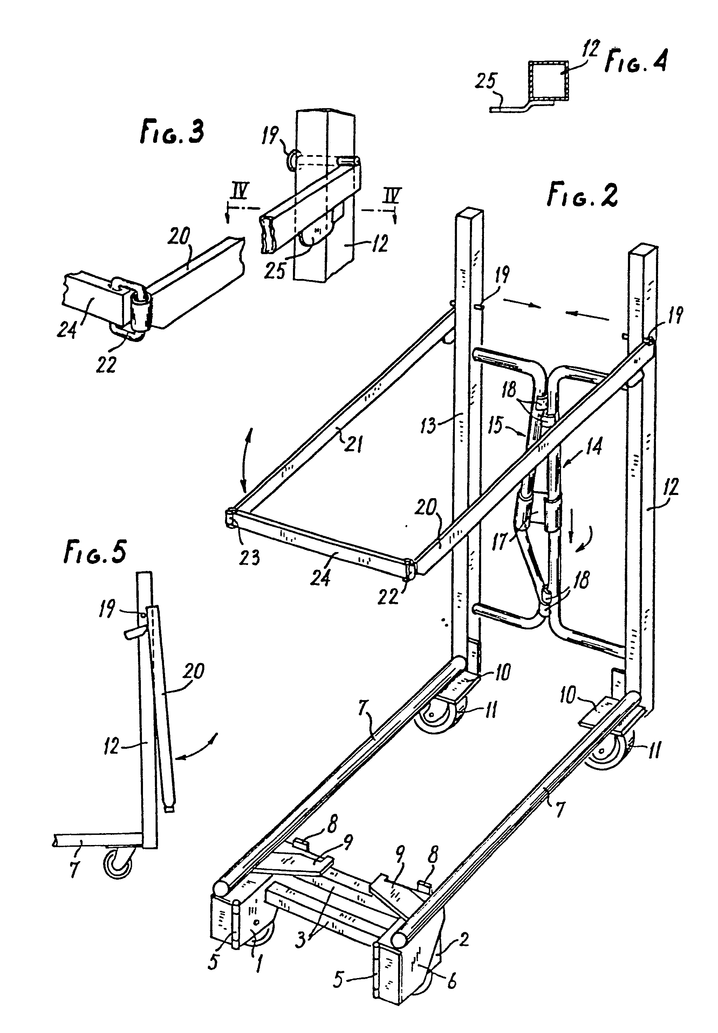

Par ailleurs, des pièces de centrage 18, par exemple en forme d'arc de cercle, sont fixées sur le montant de chacun des deux cadres 14, 15 pour réaliser un emboîtement mutuel lorsque ces deux cadres sont amenés en butée et verrouillés par le verrou 17, comme cela est représenté à la fig. 2.

Les cadres 14, 15 peuvent par exemple être réalisés en tube ou en fer rond ou autres profilés, le verrou pivotant et les pièces de centrage étant fabriqués en tôle ou autre matière et munis, éventuellement, d'organes élastiques, par exemple en caoutchouc.

Les montants 12, 13 supportent au-dessus des cadres 14, 15, des pivots 19 sur lesquels sont fixées des barres 20, 21 dont l'une est bien visible à la fig. 3.

Les barres 20, 21 sont reliées par des articulations 22, 23 à une traverse 24. La fig. 3 montre que les articulations, telles que 22, peuvent être constituées par un simple anneau.

Des butées 25 sont fixées, par exemple soudées, à chacun des montants 12, 13 pour servir d'appui aux barres 20, 21 et limiter leur pivotement vers le bas lorsqu'elles se trouvent dans la position illustrée par les figs. 1 à 3, c'est-à-dire placées au-dessus des longerons 7.

La fig. 5 montre que les barres 20, 21 peuvent être pivotées dans le sens des aiguilles d'une montre pour passer de l'autre côté des montants 12, 13 en libérant ainsi l'espace au-dessus des longerons 7.

Comme cela apparaît clairement au dessin, en particulier à la fig. 2, les cadres 14, 15 s'étendent à un niveau qui se trouve au-dessus des longerons 7 et en dessous des barres 20, 21.

De cette façon, lorsque les chariots sont inutilisés, le verrou 17 est ouvert par exemple en le faisant coulisser vers le haut sur le montant 16 du cadre 15 puis en le faisant pivoter, comme illustré par les flèches $f_1$, $f_2$ de la fig. 1.

Les montants 12, 13 sont alors écartés jusqu'au moment où les ailes 9 viennent en appui contre la butée 8 du châssis.

Il est de cette manière possible d'engager un second chariot à l'intérieur du premier chariot puisque le châssis constitué par les boîtiers 2 et traverses 3 et les longerons 7 se trouvent à un niveau inférieur aux cadres 14, 15 tandis que les barres 20, 21 et leur traverse 24 se trouvent à un niveau supérieur auxdits cadres 14, 15; on peut ainsi emboîter les uns dans les autres un grand nombre de chariots.

Lorsqu'un chariot doit être utilisé, on réunit à nouveau les cadres et on verrouille ceux-ci, comme illustré par la fig. 2. Dans cette position, les barres 20, 21 sont pivotées pour dégager les longerons 7 puis des plateaux 26 sont posés sur les longerons. Les plateaux 26 sont des plateaux prévus pour contenir des conteneurs 27, par exemple des cartons de lait à toit pointu 28 et, dans ce cas, les plateaux forment sur leur dessous des encoches 29 destinées à coiffer le toit pointu 28 d'une rangée de conteneurs. Ce sont les encoches latérales 29 qui sont mises à profit pour coiffer les longerons 7, comme l'illustrent les fig. 6 et 7.

Lorsque les plateaux, tels que 26a (fig. 8) se présentent sous forme de parallélépipèdes rectangles et qu'ils contiennent des conteneurs 28a se présentant également sous la forme de parallélépipèdes rectangles, les longerons 7 sont réalisés par des cornières, comme le montre la fig. 8, ou des pattes latérales sont fixées aux longerons 7 si ceux-ci sont constitués par des tubes.

La fig. 6 montre qui plusieurs rangées de plateaux 26 et conteneurs 27 peuvent être empilées sur le chariot les unes au-dessus des autres.

Avant de déplacer le chariot, l'opérateur ramène les barres 20, 21 formant ceinture à la position représentée à la fig. 6 pour que ces barres formant ceinture avec la traverse 24 servent à retenir au moins l'un des plateaux 26; le chariot peut alors être déplacé sans qu'il y ait risque de chute de l'un quelconque des plateaux.

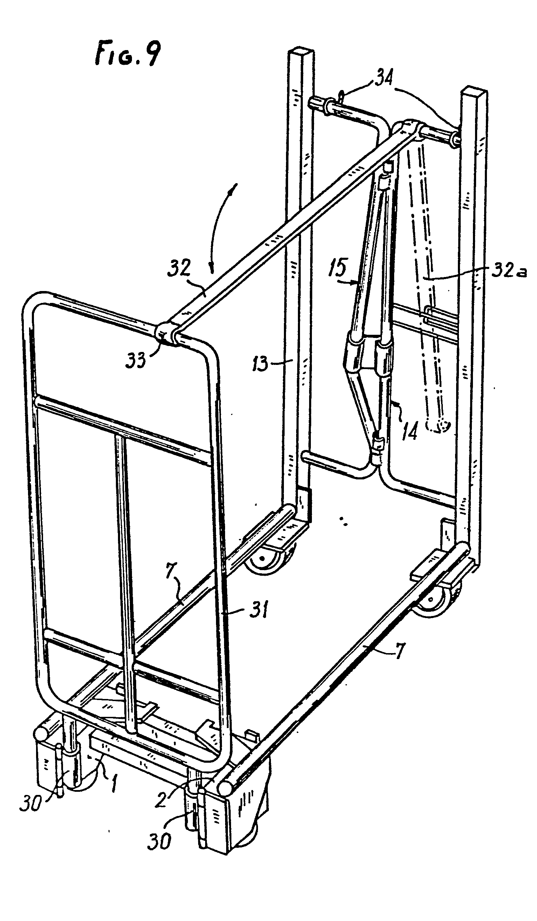

La fig. 9 illustre une variante selon laquelle les boîtiers 1, 2 sont munis de manchons 30 pour la mise en place d'une ridelle 31. Dans ce cas, une barre 32 terminée par un crochet 33 est articulée sur l'un des cadres, par exemple le cadre 14, de manière que ladite barre puisse soit verrouiller la ridelle 31 par son crochet 33, soit être amenée dans une position dans laquelle elle est désignée par 32a et est donc placée de l'autre côté des cadres 14, 15 pour permettre la mise en place facile des plateaux 26 ou 26a et des conteneurs 27 qu'ils supportent.

La ridelle 31 étant simplement engagée dans les manchons 30 portés par les boîtiers 1 du châssis, cette ridelle est facilement amovible de sorte qu'elle peut aisément être retirée lorsqu'il y a lieu d'emboîter plusieurs chariots les uns dans les autres.

Il est avantageux de prévoir des crochet libres 34 sur la traverse supérieure des cadres 14, 15 pour permettre la suspension de la ridelle 31 lorsque les chariots sont mis à la disposition des consommateurs ou stockés par emboîtement.

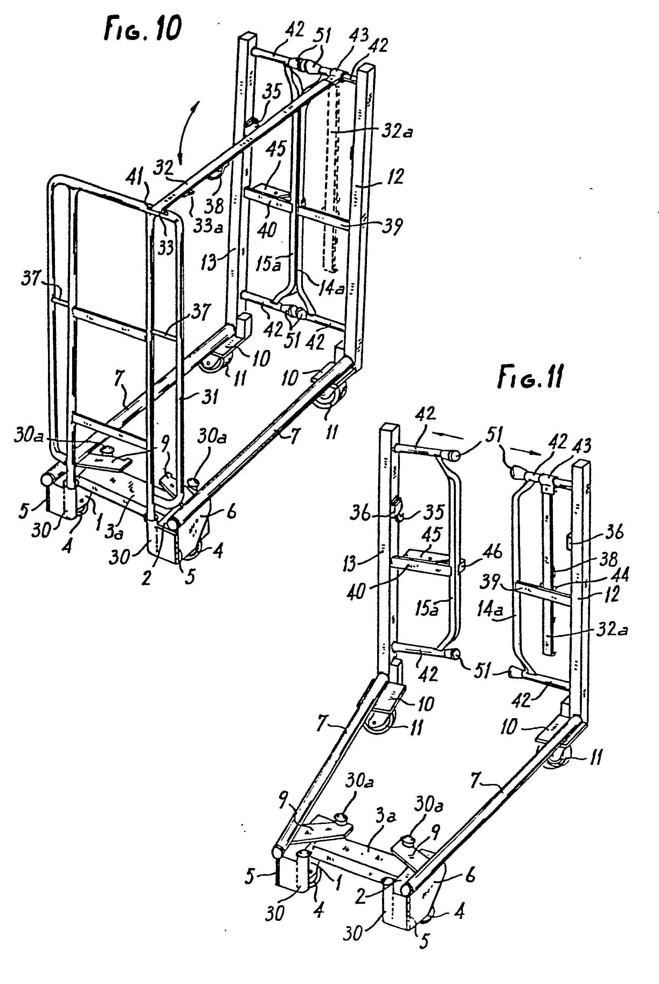

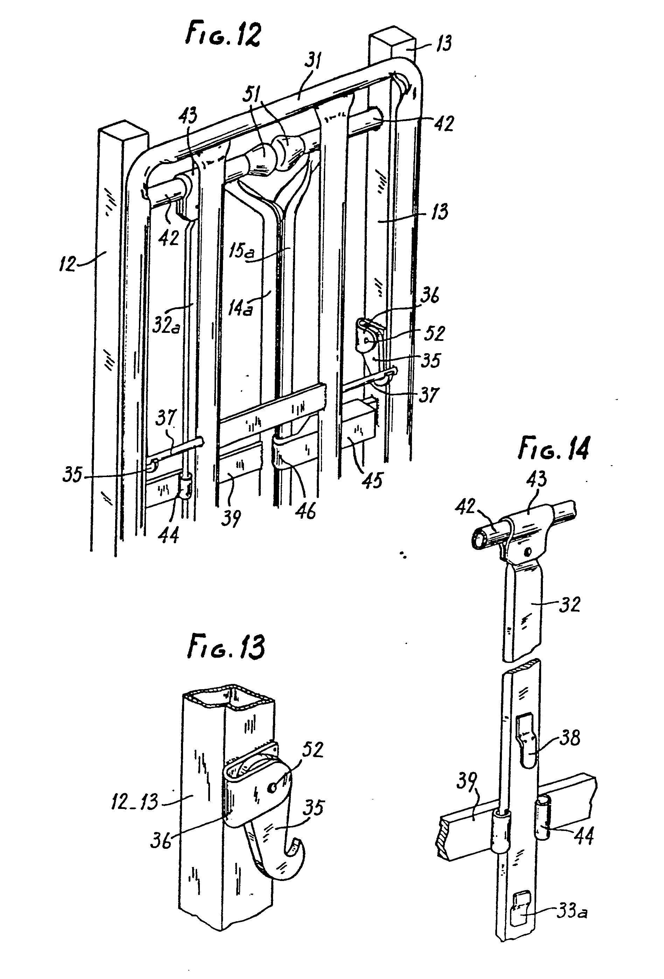

Selon la variante des fig. 10 à 18, la ridelle 31 comporte des barreaux transversaux 37 permettant de la fixer à des crochets pivotants 35 (fig. 12 et 13) montés sur les montants 12, 13. Les crochets 35 permettent de supporter la ridelle sur le chariot lorsque celui-ci n'est pas utilisé ou que la présence de cette ridelle n'est pas utile. Le fait que les crochets soient pivotants permet qu'ils soient escamotés à l'intérieur des montants 12, 13. La position qu'occupe alors la ridelle apparaît clairement à la fig. 12.

La traverse 3a qui relie les boîtiers 1, 2 comporte

au moins deux paires de manchons 30, 30*a*. Les manchons 30*a* remplacement les butées 8 décrites dans ce qui précède et contre lesquelles viennent prendre appui les ailes 9 lorsque les montants 7 sont écartés.

Chacune des deux paires de manchons 30, 30*a* peut recevoir la ridelle 31, le choix entre l'une ou l'autre paire de manchons 30 ou 30*a* étant dicté par les dimensions que présentent les plateaux 26 qui doivent être supportés par le chariot.

Comme dans les exemples précédentes, le maintien de la charge de plateaux remplis est assuré par une barre 32 (fig. 10 et 14). La barre 32 délimite à une extrémité un crochet 33 bien visible aux fig. 10 et 17, crochet qui est destiné à être engagé dans un évidement 41 prévu dans le tube transversal supérieur de la ridelle 31. Lorsque la ridelle est mise en place dans les manchons 30*a*, c'est un second crochet 33*a* rapporté en dessous de la barre 32 qui est engagé dans l'évidement 41.

La barre de retenue 32 est articulée par une chape 43 sur un tube 42 s'étendant transversalement à partir de l'un des montants 12, 13. Comme précédemment, la barre 32 peut être décrochée de la ridelle 31 et rabattue en arrière, comme illustré en 32*a* à la fig. 10. Elle est alors avantageusement maintenue par un organe de retenue élastique 44, illustré à la fig. 14, par un ruban métallique roulé sur lui-même.

Il est avantageux que la barre 32 soit munie d'un organe de prise 38, par exemple un crochet pour permettre qu'elle soit saisie mécaniquement et pivotée puis rabattue sur la ridelle 31 après le chargement des plateaux sur les longerons 7.

Les fig. 10 à 12 montrent que les montants 12 et 13 supportent des traverses tubulaires 42 à leur partie haute et à leur partie basse, traverses tubulaires qui sont munies d'embouts amortisseurs 51, par exemple en caoutchouc ou matière plastique.

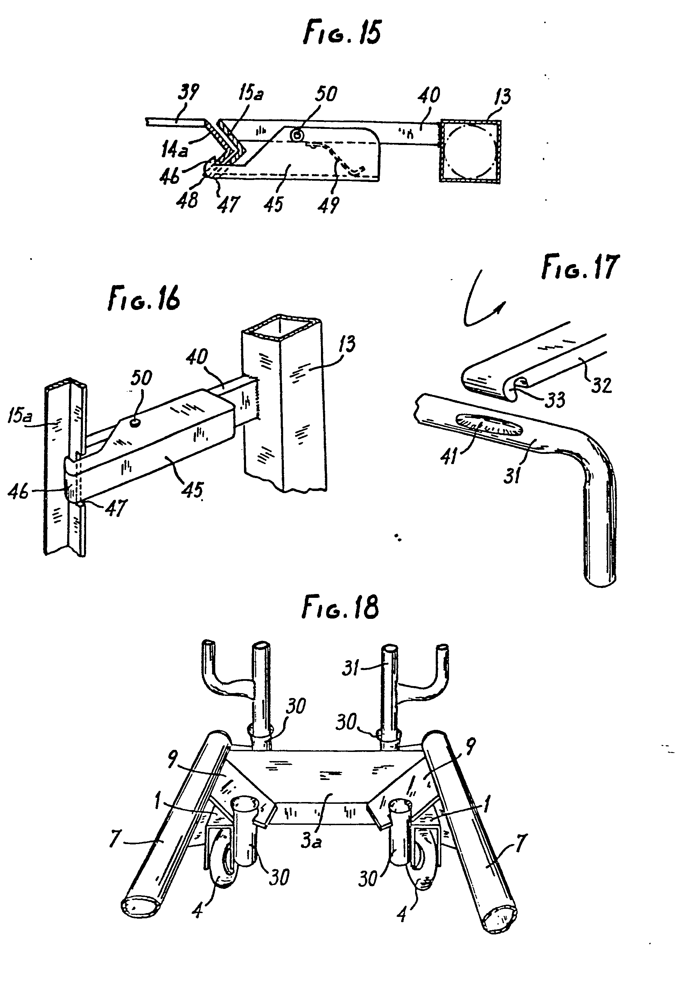

Les traverses tubulaires 42 sont reliées par des profilés 14*a*, 15*a* en L dont les extrémités sont repliées pour être fixées aux traverses tubulaires 42. Les profilés 14*a* et 15*a* sont disposés, ainsi que l'illustre la fig. 15, pour être emboîtés l'un dans l'autre lorsque les embouts amortisseurs 51 sont en contact, ce qui est illustré par les fig. 10 et 12.

Le verrouillage des profilés, et par conséquent des cadres qu'ils constituent avec les montants 12, 13 et les traverses tubulaires 42, est assuré par un verrou 45 articulé sur un axe 50 porté par une traverse 40. Le maintien du verrou 45 en position fermée est assuré par un ressort 49, par exemple à lame, comme illustré par les fig. 12, 15 et 16.

Il est avantageux, ainsi que l'illustre la fig. 15, que le bec 46 du verrou 45 soit engagé dans des encoches 47, 48 des profilés 14*a*, 15*a*.

L'invention n'est pas limitée aux exemples de réalisation représentés et décrits en détail. En particulier, les montants 12, 13 peuvent être réalisés par des tubes cylindriques comme cela est illustré en trait mixte.

## Revendications

1. Chariot pour le transport de plateaux porte-conteneurs, notamment pour produits alimentaires, comportant un châssis comprenant deux boîtiers (1, 2) supportés chacun par une roue (4) et sur chacun desquels est articulé selon un axe vertical un longeron horizontal (7) muni chacun à son extrémité opposée au boîtier de moyens (10) sur lesquels sont fixés d'une part une roue (11) et d'autre part un montant (12, 13) vertical, caractérisé en ce que les boîtiers (1, 2) sont reliés ensemble rigidement par un châssis (3) et en ce que les montants (12, 13) supportent chacun un cadre vertical (14, 15) tels qu'en utilisation du chariot ceux-ci soient tournés l'un vers l'autre et maintenus par un verrou amovible (17) et en ce que lesdits longerons (7) constituent des supports pour une première rangée de plateaux (26, 26a) remplis de conteneurs (27) sur lesquels sont placées d'autres rangées de plateaux (26) et conteneurs (27).

2. Chariot selon la revendication 1, caractérisé en ce que l'amplitude de pivotement des longerons est limitée par des ailes (9) fixées aux longerons et des butées (8) fixées au châssis (3).

3. Chariot selon la revendication 1 ou 2, caractérisé en ce que les montants (12, 13) supportent des pivots (19) pour des barres (20, 21) réunies entre elles par des articulations (22, 23) et une traverse (24) pour constituer une ceinture venant serrer des plateaux (26) dans une position et étant escamotée derrière les montants dans une autre position.

4. Chariot selon l'une des revendications 1 à 3, caractérisé en ce que chaque cadre vertical (14, 15) reliant les montants entre eux est disposé à des hauteurs comprises au-dessus du niveau des longerons et en dessous des barres formant la ceinture pour permettre l'emboîtement de plusieurs chariots.

5. Chariot selon l'une des revendications caractérisé en ce que les boîtiers du châssis sont munis de manchons (30) pour la mise en place amovible d'une ridelle (31) reliée à un cadre (14, 15) d'un montant (12, 13) par une barre pivotante (32).

6. Chariot selon l'une des revendications 1 à 5, caractérisé en ce que les longerons sont constitués par des tubes, cornières ou autres profilés complémentaires à la forme que présentent les plateaux (26, 26a).

7. Chariot selon l'une des revendications 1 à 6, caractérisé en ce que les cadres (14, 15) sont munis de crochets (34, 35) pour la suspension de la ridelle (31).

8. Chariot selon l'une des revendications 1 à 7, caractérisé en ce qu'au moins deux paires de manchons (30, 30a) sont prévues pour la mise en place dans des positions distinctes de la ridelle (31), l'une des paires de manchons constituant des butées limitant l'ouverture des longerons (7).

9. Chariot selon l'une des revendications 5 à 8, caractérisé en ce que la barre pivotante (32) est munie de plusieurs crochets (33, 33a) pour sa fixation à la ridelle (31) selon que cette ridelle est disposée dans l'une des paires de manchons (30, 30a).

10. Chariot selon l'une des revendications 5 à 9, caractérisé en ce que la barre pivotante (32) est munie d'un organe de saisie (38) pour sa manoeuvre par des moyens mécanisés.

11. Chariot selon l'une des revendications 1 à 10, caractérisé en ce que les cadres portés par les montants (12, 13) sont munis de traverses supérieure et inférieure (42) dont les extrémités comportent des embouts amortisseurs (51) en caoutchouc ou matière plastique.

12. Chariot selon l'une des revendications 1 à 11, caractérisé en ce que les traverses supérieure et inférieure (42) supportées par les montants (12, 13) sont munies de profilés emboîtables (14a, 15a) coopérant avec un verrou (45).

## Patentansprüche

1. Transportfahrzeug für Paletten, Tabletts od. dgl. zur Aufnahme von Behältern, insbesondere für Lebensmittel, mit einem Gestell, das zwei Gehäuse (1, 2) aufweist, von denen jedes auf eine Rolle (4) abgestützt ist, und an denen, gemäss eine senkrechten Achse, jeweils ein Längsholm (7) angelenkt ist, von denen jeder an seinem dem Gehäuse entgegengesetzten Ende Mittel (10) aufweist, auf welche einerseits eine Rolle (11) und andererseits ein senkrechter Ständer (12, 13) befestigt ist, dadurch gekennzeichnet, dass die Gehäuse (1, 2) durch ein Gestell (3) fest miteinander verbunden sind, und dass die Ständer (12, 13) jeweils einen senkrechten Rahmen (14, 15) tragen, so dass, wenn das Fahrzeug in Benutzung ist, diese jeweils gegeneinander gerichtet sind und von einem lösbaren Riegel (17) zusammengehalten werden, und dass die besagten Längsholme (7) Stützen für eine erste Reihe von Tabletts oder Paletten (26, 26a) bilden, die mit Behältern (27) gefüllt sind, auf denen weitere Reihen von Tabletts oder Paletten (26) und Behältern (27) angeordnet sind.

2. Fahrzeug nach Anspruch 1, dadurch gekennzeichnet, dass der Schwenkbereich der Längsholme (7) durch an diesen befestigte Flansche (9) und an dem Gestell (3) befestigte Anschläge (8) begrenzt ist.

3. Fahrzeug nach Anspruch 1 oder 2, dadurch gekennzeichnet, dass die Ständer (12, 13) Drehzapfen (19) für Streben (20, 21) tragen, die durch Gelenke (22, 23) und eine Traverse (24) miteinander zur Bildung eines Rahmens verbunden sind, der in seiner einen Stellung die Tabletts, Platten (26) trägt und in seiner anderen Stellung an die Ständer (12, 13) angeklappt ist.

4. Fahrzeug nach einem der Ansprüche 1 bis 3, dadurch gekennzeichnet, dass jeder senkrechte Rahmen (14, 15), der die Ständer (12, 13) miteinander verbindet, in einer Höhe über dem Niveau der Längsholme (7) und unterhalb der den Rahmen bildenden Streben (20, 21) angeordnet ist, um mehrere Fahrzeuge ineinandergreifen zu lassen.

5. Fahrzeug nach einem der Ansprüche 1 bis 4, dadurch gekennzeichnet, dass die an dem Gestell (3) angeordneten Gehäuse mit Muffen (30) zur lösbaren Aufnahme eines Stützrahmens (31) versehen sind, der mit dem Rahmen (14, 15) eines Ständers (12, 13) durch eine verschwenkbare Strebe (32) verbindbar ist.

6. Fahrzeug nach einem der Ansprüche 1 bis 5, dadurch gekennzeichnet, dass die Längsholme aus Rohren, Winkelprofilen od. dgl. bestehen, die zu den die Tabletts oder Paletten (26, 26a) bildenden Profilen komplementär sind.

7. Fahrzeug nach einem der Ansprüche 1 bis 6, dadurch gekennzeichnet, dass die Rahmen (14, 15) mit Haken (34, 35) zum Aufhängen des Stützrahmens (31) versehen sind.

8. Fahrzeug nach einem der Ansprüche 1 bis 7, dadurch gekennzeichnet, dass mindestens zwei Paare von Muffen (30, 30a) vorgesehen sind, die zur Aufnahme des Stützrahmens (31) in verschiedenen Stellungen dienen, wobei das eine Paar die das Öffnen der Längsholme (7) begrenzenden Anschläge bildet.

9. Fahrzeug nach einem der Ansprüche 5 bis 8, dadurch gekennzeichnet, dass die schwenkbare Strebe (32) mehrere Haken (33, 33a) zu ihrer Befestigung an dem in jeweils einem Buchsenpaar (30, 30a) angeordneten Stützrahmen (31) aufweist.

10. Fahrzeug nach einem der Ansprüche 5 bis 9, dadurch gekennzeichnet, dass die verschwenkbare Strebe (32) einen Beschlag (38) aufweist, der ihrer Handhabung auf mechanische Weise dient.

11. Fahrzeug nach einem der Ansprüche 1 bis 10, dadurch gekennzeichnet, dass die von den Ständern (12, 13) getragenen Rahmen obere und untere Traversen (42) aufweisen, deren Enden Puffer (51) aus Gummi oder Kunststoff tragen.

12. Fahrzeug nach einem der Ansprüche 1 bis 11, dadurch gekennzeichnet, dass die von den Ständern (12, 13) getragenen oberen und unteren Traversen (42) mit einsteckbaren Profilen (14a, 15a) versehen sind, die mit einer Verriegelung (45) zusammenwirken.

## Claims

1. Trolley for transporting trays carrying containers, in particular for food products, comprising a body comprising two boxes (1, 2) each supported by a wheel (4) and on each of which is articulated, according to a vertical axis, a horizontal longitudinal member (7) each provided, at its end opposed to the box, with means (10) on which are secured on the one hand a wheel (11) and on the other hand a vertical upright (12, 13), characterized in that the boxes (1, 2) are rigidly connected together by a body (3) and in that the uprights (12, 13) each support a vertical frame (14, 15) such that, in use of the trolley, the same are turned the one towards the other and maintained by a removable bolt (17) and in that said longitudinal members (7) form supports for a first row of plates (26, 26a) filled with containers (27) on which are placed other rows of plates (26) and containers (27).

2. Trolley according to claim 1, characterized in that the pivoting amplitude of the longitudinal members is limited by wings (9) secured to the longitudinal members and stops (8) secured to the body (3).

3. Trolley according to claim 1 or 2, characterized in that the uprights (12, 13) support a set of pivots for a set of bars (20, 21) connected together by a set of articulations (22, 23) and a crossbar (24) for forming a belt coming to tighten a set of trays (26) in one position and being retracted behind the uprights in another position.

4. Trolley according to one of claims 1 to 3, characterized in that each vertical frame (14, 15) connecting the uprights together is placed at heights comprised above the level of the longitudinal members and under the bars forming the belt for enabling the encasing of a plurality of trolleys.

5. Trolley according to one of claims 1 to 4, characterized in that the boxes of the body are provided with sleeves (30) for the removable positioning of a ladder (31) connected to a frame (14, 15) of an upright (12, 13) by a pivoting bar (32).

6. Trolley according to one of claims 1 to 5, characterized in that the longitudinal members are formed by tubes, corner plates or other sections of a shape complementary to that of the trays (26, 26a).

7. Trolley according to one of claims 1 to 6, characterized in that the frames (14, 15) are provided with hooks (34, 35) for suspending the ladder (31).

8. Trolley according to one of claims 1 to 7, characterized in that at least two pairs of sleeves (30, 30a) are provided for the positioning, in various positions, of the ladder (31), one of the pairs of sleeves forming a set of stops limiting the opening of the longitudinal members (7).

9. Trolley according to one of claims 5 to 8, characterized in that the pivoting bar (32) is provided with a plurality of hooks (33, 33a) for fixing it to the ladder (31) according to the fact this ladder is placed within one of the pairs of sleeves (30, 30a).

10. Trolley according to one of claims 5 to 9, characterized in that the pivoting bar (32) is provided with a seizing means (38) for handling it by mechanized means.

11. Trolley according to one of claims 1 to 10, characterized in that the frames carried by the uprights (12, 13) are provided with upper and lower cross-bars (42), the ends of which comprise damping tips (51) of rubber or plastics material.

12. Trolley according to one of claims 1 to 11, characterized in that the upper and lower cross-bars (42) carried by the uprights (12, 13) are provided with encasable shaped members (14a, 15a) cooperating with a bolt (45).

EP 0 160 598 B1

FIG. 1

1

EP 0 160 598 B1

FIG. 4

FIG. 3

FIG. 2

FIG. 5

2

FIG.6

FIG.7

FIG.8

Fig.9

FIG. 10

FIG. 11

Fig.12

Fig.14

Fig.13

## FIG. 15

## FIG. 16

## FIG. 17

## FIG. 18